# FASCICULE DE BREVET EUROPEEN

(11) **EP 3 237 244 B1**
(45) Date de publication et mention de la délivrance du brevet: **23.10.2019**
(21) Numéro de dépôt: 15817868.1
(22) Date de dépôt: 23.12.2015
(51) Int. Cl.: B60K 7/00

(54) **MOTEUR HYDRAULIQUE COUPLE**
HYDRAULIKDREHMOMENTMOTOR
HYDRAULIC TORQUE MOTOR

(30) Priorité: 23.12.2014 FR 1463234
(43) Date de publication de la demande: 01.11.2017
(73) Titulaire: Poclain Hydraulics Industrie, 60410 Verberie (FR)
(72) Inventeur: RECOURA, Clément, Philippe, 60410 Verberie (FR)
(74) Mandataire: Regimbeau
(86) Numéro de dépôt international: PCT/EP2015/081205
(87) Numéro de publication internationale: WO 2016/102692

(56) Documents cités:
- DE-A1- 19 503 477
- GB-A- 2 112 500
- US-B1- 6 186 262

## Description

### DOMAINE TECHNIQUE GENERAL

L'invention concerne les architectures de châssis, essieu et moyeu. En particulier, l'invention concerne les fonctions palières et la motorisation locale de roues.

### ETAT DE L'ART

Pour suppléer à un manque de couple et de puissance de véhicule, en particulier les engins agricoles, de chantier ou de manutention, il existe des dispositifs d'apport de couple ponctuel à l'aide de moteurs à pistons radiaux, appelés sous le nom plus générique d'assistance hydraulique temporaire. Lors par exemple d'une montée, d'une charge importante, d'un glissement, les moteurs hydrauliques s'activent et offrent de la motricité avec un couple élevé aux roues motorisées par lesdits moteurs. Ces dispositifs sont par exemple de manière connue placés sur les roues motrices et les roues non motrices du véhicule, de manière à faire un report de couple d'un essieu moteur sur un essieu non moteur, créant ainsi une assistance à la traction pour les roues temporaires. Ces moteurs peuvent être soit alimentés par une pompe haute pression, ou pompe principale, entrainée par un moteur thermique, soit dans un circuit sans pompe, chaque essieu comportant un ou des moteurs, et transférant du couple d'un essieu sur l'autre, dans un sens ou dans un autre, suivant les besoins. Ce type de moteur peut donc être placé soit sur un essieu entrainé par une transmission mécanique, soit sur un essieu non entrainé par la dite transmission mécanique, dit essieu porteur. Des pompes de gavage à faible pression, peuvent être ajoutées pour remplir ou vider le circuit, piloter des composants de circuit, ou participer au refroidissement et aux fonctions auxiliaires suivant les besoins.

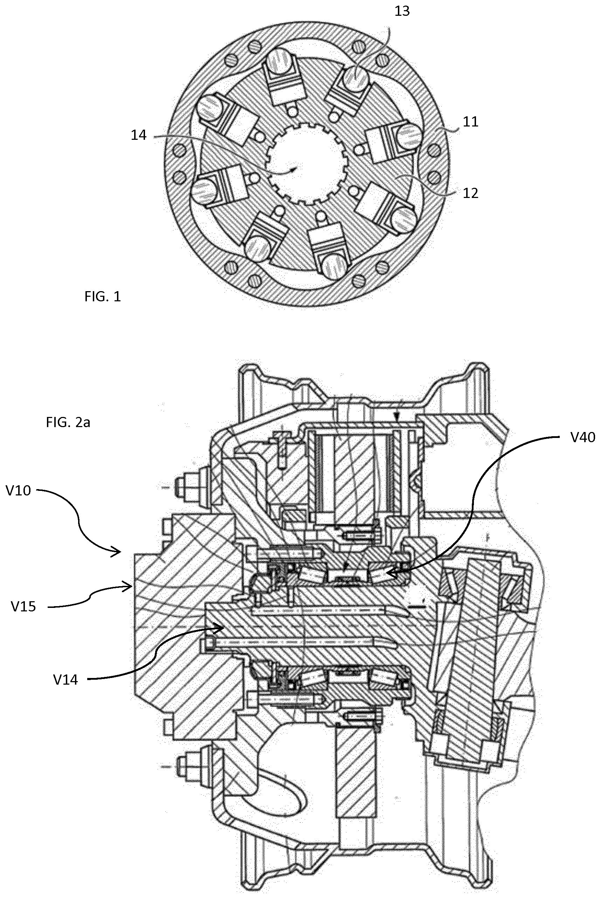

En référence à la **figure 1**, un moteur hydraulique 10 à pistons radiaux comprend une came lobée 11, un bloc-cylindre 12, des pistons 13, un arbre 14. Les pistons 13, au contact de la came lobée 11, effectuent des mouvements de va-et-vient dans leur cylindre respectif, ce qui permet de convertir l'énergie hydraulique en énergie mécanique. De tels moteurs présentent une vitesse de rotation faible mais un couple élevé.

Il existe plusieurs types d'architecture permettant la transmission du couple depuis le moteur 10 vers la roue. Néanmoins, certaines nécessitent des adaptations complexes et coûteuses.

Le document WO201140843 décrit un moteur hydraulique V10 à arbre fixe V14 et carter tournant V15, le carter entrainant le moyeu de roue et les paliers s'appuyant sur l'arbre. Dans cette architecture, L'arbre fixe V14 est confondu avec la fusée de la roue et des paliers V40 reprennent la charge du véhicule sur la fusée. De plus, le moteur hydraulique est situé sur l'extérieur de la roue. Une telle architecture est représentée en **figure 2a****.**

Il est aussi connu d'avoir un moteur hydraulique 10 dont l'arbre 14 constitue l'essieu de la roue et porte les paliers, c'est-à-dire qu'il supporte le poids du véhicule. La demande FR n°1358962 (dans son art antérieur) et le document FR2996277, tous deux au nom du Demandeur, présentent des paliers supportés directement par l'arbre du moteur.

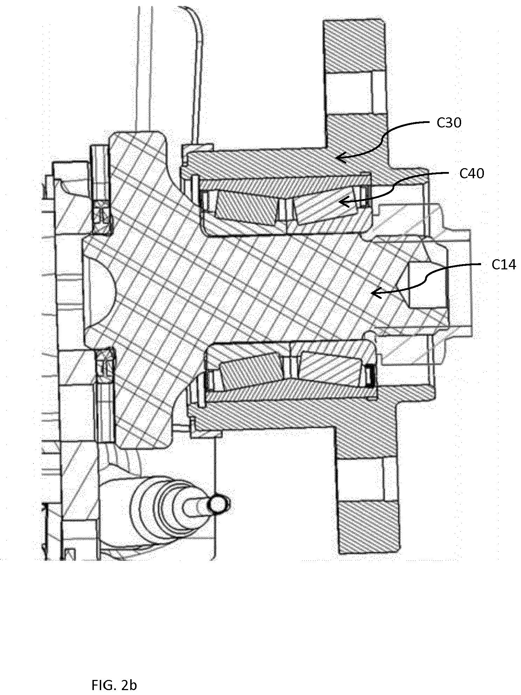

Or, il est souhaitable d'obtenir un moteur hydraulique pouvant se monter sur les architectures classiques de véhicule, comme un moyeu porteur non motorisé représenté en **figure 2b** (moyeu C30, palier C40, arbre fusée C14), sans nécessité d'aménagements complexes. En particulier, l'installation de moteur couple, c'est-à-dire dont l'arbre ne porte pas le poids du véhicule est désirée.

Le document US6186262 décrit un ensemble comprenant un moteur hydraulique à piston radiaux, comprenant un carter fixe, un arbre, pouvant être entraîné en rotation par le moteur hydraulique, un moyeu de roue comprenant un fut de moyeu, un palier, un support de palier.

### PRESENTATION DE L'INVENTION

L'invention concerne un ensemble comprenant :
- Un moteur hydraulique à piston radiaux, comprenant un carter fixe,
- Un arbre, pouvant être entrainé en rotation par le moteur hydraulique,
- Un moyeu de roue comprenant un fut de moyeu qui vient en prise sur l'arbre,
- Un palier,
- Un support de palier,

Dans lequel :
- les paliers sont logés entre le fut de moyeu et le support de palier du moteur hydraulique,
- le support de palier fait partie du carter,
de sorte que la fonction palière soit effectuée par le carter, l'arbre ne portant que son propre poids et ayant une fonction couple uniquement.

L'ensemble peut comprendre les caractéristiques suivantes, prises seules ou en combinaison :
- le moteur hydraulique comprend un bloc-cylindre qui entraine en rotation l'arbre et dans lequel ledit bloc-cylindre et l'arbre sont débrayables, la fonction palière étant conservée par le carter en position débrayée et embrayée,
- L'ensemble comprend un coupleur multi-disque entre le bloc-cylindre et l'arbre, le coupleur permettant l'embrayage et le débrayage,
- le palier est situé longitudinalement entre le moyeu et le moteur hydraulique,
- l'arbre est traversant du côté du moteur hydraulique,
- le moteur comprend une fonction mesure de vitesse, comprenant une cible liée à une partie tournante, et un capteur lié à une partie fixe du moteur, donnant une indication de vitesse de rotation de la roue même si le moteur est débrayé ; la fonction mesure de vitesse sert avantageusement pour l'ABS
- la cible est logée dans l'extrémité débouchant de l'arbre du côté du moteur hydraulique, le capteur étant rattaché à une partie fixe ; la cible est avantageusement une cible d'ABS,
- l'ensemble comprend en outre des freins,
- le frein est un frein à disque avec un disque monté solidairement au moyeu et un étrier monté solidairement au carter et/ou à un couvercle de distribution et adapté pour pincer le disque,
- le frein est un frein à tambour, avec un tambour solidaire du moyeu et au moins une mâchoire solidaire du carter,
- un cardan de transmission est relié à la partie traversant de l'arbre, ledit cardan transmettant un couple à l'arbre,
- ledit cardan est relié à une chaine de transmission mécanique, le moteur hydraulique appliquant un couple dans le même sens ou dans le sens opposé à celui exercé par ladite transmission mécanique.

L'invention concerne aussi un système comprenant un ensemble selon l'une quelconque des revendications précédentes et un élément de suspension, caractérisé en ce que le carter et/ou un couvercle de distribution, compris dans le carter, est solidaire de l'élément de suspension.

En outre, le système peut avoir des conduits d'alimentation portés par le carter ou le couvercle de distribution solidaires de l'élément de suspension.

L'élément de suspension peut être un bras de suspension.

L'invention concerne un véhicule comprenant un ensemble ou un système selon l'une quelconque des revendications précédentes.

L'invention propose aussi des procédés d'assemblage du moteur comprenant une étape de solidarisation du moteur et des freins à l'élément de suspension à l'aide de vis.

Avantageusement, le procédé peut comprendre les caractéristiques suivantes, prises seules ou en combinaison :
- le système comprend des freins, et l'étape de solidarisation comprend les étapes suivantes :
   Mise en place et solidarisation d'une partie fixe des freins à l'élément de suspension à l'aide de vis, la vis s'insérant d'abord dans l'élément de suspension puis ensuite dans la partie fixe,
   Mise en place et solidarisation du moteur à l'élément de suspension à l'aide de vis, chaque vis s'insérant d'abord dans le carter du moteur puis ensuite dans l'élément de suspension,
   de sorte que l'assemblage soit destiné à être fait depuis l'intérieur du véhicule, côté essieu.
- le système comprend des freins, et l'étape de solidarisation comprend les étapes suivantes :
   Mise en place du moteur et d'une partie fixe des freins de part et d'autre de l'élément de suspension,
   Solidarisation du moteur, de l'élément de suspension et de la partie fixe des freins, à l'aide de vis, chaque vis s'insérant d'abord dans la partie fixe puis dans l'élément de suspension et enfin dans le carter, de sorte que l'assemblage puisse être effectué depuis l'extérieur du véhicule, côté roue.
- le procédé comprend une étape de
   Mise en place du moyeu et d'une partie mobile des freins, configurée pour être solidaires du moyeu,
   Mise en place d'un écrou de fusée en extrémité de l'arbre pour maintenir le moyeu.

### PRESENTATION DES FIGURES

D'autres caractéristiques, buts et avantages de l'invention ressortiront de la description qui suit, qui est purement illustrative et non limitative, et qui doit être lue en regard des dessins annexés, sur lesquels :
- La figure 1 représente un moteur hydraulique à pistons radiaux,
- La figure 2a représente un ensemble de l'état de la technique,
- La figure 2b représente un moyeu de roue non motorisée tel qu'existant dans l'état de la technique,
- La figure 3 représente un ensemble conforme à un mode de réalisation de l'invention,
- Les figures 4 et 5 représentent un ensemble conforme à un mode de réalisation de l'invention avec un frein à disque,
- La figure 6 représente un ensemble conforme à un mode de réalisation de l'invention avec un frein à tambour,
- La figure 7 représente un ensemble conforme à une mode de réalisation de l'invention vu de face, c'est-à-dire dans la direction de l'arbre moteur,
- La figure 8 représente une vue selon la coupe BB de la figure 7,
- La figure 9 représente, selon un mode de réalisation, des étapes d'assemblage de l'ensemble en vue avec deux coupes juxtaposées selon la ligne pointillée horizontale, les deux coupes correspondant à la coupe bi-axée AA de la figure 7,
- La figure 10 représente des étapes d'assemblage selon un autre mode de réalisation.

### DESCRIPTION DETAILLEE

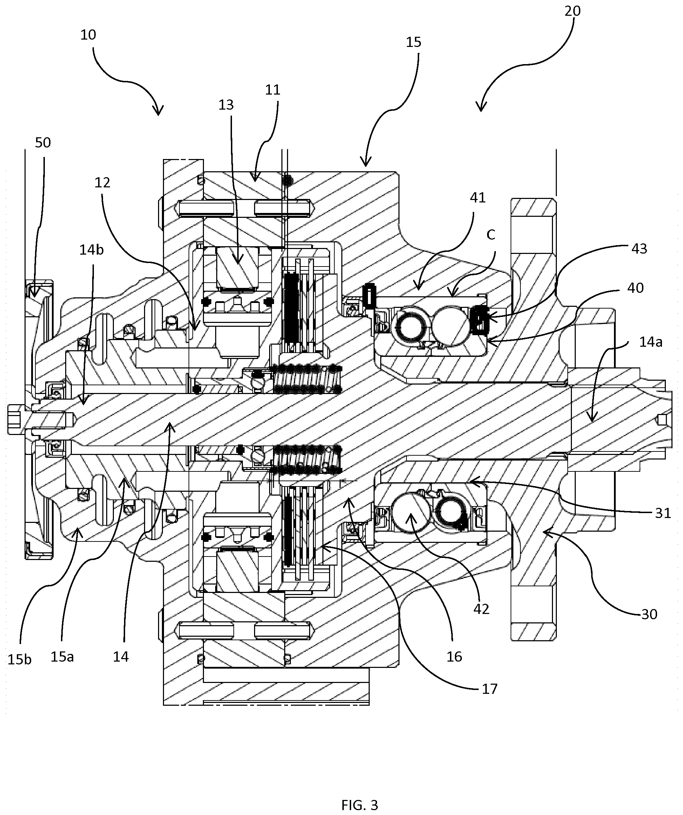

En référence à la **figure 3**, un mode de réalisation détaillé de l'ensemble 20 va être décrit.

L'ensemble 20 comprend un moteur hydraulique 10 à pistons radiaux tel que décrit précédemment. Il sert à motoriser des roues d'un véhicule monté sur un châssis.
Le moteur 10 peut être relié hydrauliquement soit à une pompe haute pression entrainée par un moteur thermique ou électrique, soit alimenté par un autre moteur hydraulique, relié à une autre roue d'un véhicule.

Le moteur comprend la came lobée 11, le bloc-cylindre 12, les pistons 13, et l'arbre 14. Le moteur est logé dans un carter 15, duquel la came lobée 11 est solidaire. Le carter 15 est sous pression d'huile.

Le moteur 10 comprend un distributeur 15a qui alimente le bloc-cylindre en huile sous pression et le carter 15 comprend un couvercle de distribution 15b. Le distributeur 15a est flottant et coulissant longitudinalement selon l'axe de l'arbre 14, à l'intérieur du couvercle 15b. Des gorges d'alimentation 15c, 15d sont aménagées entre le couvercle de distribution 15b et le distributeur 15a. Ces gorges sont reliées aux conduites hydrauliques d'alimentation et de retour (non représentées sur les figures) du moteur.
Selon un mode de réalisation, les conduits d'alimentation sont portés par le carter 15 ou le couvercle de distribution 15b.
Le couvercle de distribution 15b peut faire partie intégrante du carter 15, ou *a minima* être solidaire du carter 15 mais étant indépendant.

L'arbre 14 est entrainé en rotation par le bloc-cylindre 12.

Dans un mode de réalisation, le bloc-cylindre 12 et l'arbre 14 sont débrayables, à arbre tournant : lorsqu'embrayé, le bloc-cylindre 12 est lié en rotation à l'arbre 14 ; lorsque débrayé, le bloc-cylindre 12 n'est plus lié en rotation avec l'arbre 14.
Si le moteur est du type à pistons poussés par des ressorts au contact de la came, le bloc-cylindre 12 devient immobile par rapport à la came lorsqu'il est débrayé. Pour cela, l'arbre 14 présente une extension radiale 16 au niveau du bloc-cylindre et un coupleur multidisque 17 (voir **figure 3****).** Le coupleur multidisque 16 est inséré entre l'extension radiale 16 et le bloc-cylindre 12.
Le document WO 2014/048842 au nom du Demandeur décrit des coupleurs multidisques : le bloc cylindres 12 comprend une pluralité de disques adaptés pour coopérer avec une pluralité d'autres disques liés à l'arbre 14. Sous l'effet de la mise sous pression, le distributeur 15a se déplace vers le bloc cylindre 12 et entraine l'engagement des disques du coupleur 17. En l'absence d'alimentation en pression par le distributeur 15a, un moyen de rappel (non représenté), comme une rondelle de Belleville par exemple, maintient le bloc cylindre 12 en appui contre le distributeur 15a et désengage les disques du coupleur 17. Les avantages d'un tel système sont explicités dans ledit document.
Dans un autre mode de réalisation, le bloc-cylindre 12 et la came lobée 11 sont débrayables. Le moteur est alors du type à pistons 13 rétractables, le bloc-cylindre 12 est alors solidaire de l'arbre 14 et ils peuvent tourner librement.
Les modes débrayables permettent ainsi de maintenir la roue libre lorsque cela est nécessaire ou souhaité.

L'ensemble 20 comprend un moyeu de roue 30 qui sert à porter une roue du véhicule (non représentée sur les figures). Plus précisément, le moyeu 30 comprend un fût de moyeu 31 qui constitue la partie centrale du moyeu 30 qui vient en prise sur l'arbre 14, c'est-à-dire que le moyeu 30 est en prise directe avec l'arbre 14. L'arbre 14 avec le moyeu 30 constitue une fusée de roue.

L'ensemble comprend aussi un palier 40 pour permettre la rotation de la roue. Le palier 40 est logé dans une cavité C formée entre le fût de moyeu 31, radialement interne, et un support de palier 41, radialement externe, compris dans le carter 15. La cavité C est fermée par le fût de moyeu 31 et le support de palier 41, avec des joints 43a, 43b. Le système de joints sera décrit par la suite. Dans un mode de réalisation, la cavité est fermée longitudinalement par le fût de moyeu 31 du côté de la roue et par l'extension radiale 16 de l'arbre 14, du côté du bloc-cylindre 12 (**figure 3**).
Le palier 40 est donc logé entre le fût de moyeu 31 du moyeu 30 et le support de palier 41 du carter 15. Le support de palier 41 fait partie du carter 15. La reprise d'effort, c'est-à-dire la transmission du poids du véhicule, se fait du moyeu 30 vers le support de palier 41, c'est-à-dire le carter 15, *via* les paliers 30.
La fonction palière est assurée par le carter 15 ; l'arbre 14 ne porte aucun poids (à part le sien) et sert à la transmission du couple uniquement. On est dans une architecture appelée « moteur couple ». On a ainsi, comme représenté en **figures 3****,** **4** et **5**, en s'éloignant radialement de l'arbre 14 : l'arbre 14, le fût de moyeu 31, le palier 40, le carter 15.

D'une manière connue, un anneau élastique ou un autre moyen assure le calage longitudinal entre le support de palier 41, les roulements 42 et le moyeu 30.

Par cette configuration, le moyeu de roue 30 est celui déjà présent sur les véhicules de série et l'ensemble ne nécessite pas d'adaptations complexes.
De ce fait, le palier 40 est situé longitudinalement entre le moyeu 30 et le moteur hydraulique 10.

L'alimentation du moteur (lignes d'alimentation, de retour, et les drains) se fait par le couvercle de distribution 15b à l'aide d'un circuit hydraulique, comprenant des flexibles et des tuyaux rigides, relié au châssis du véhicule. Les lignes d'alimentation sont vissée/raccordées hydrauliquement à une pièce fixe liée au bras de transmission, couvercle 15b, ou carter 15. Des conduits internes (non représentés) relient ces ports aux gorges du distributeur 15c, 15d via le couvercle de distribution 15b.

Le palier 40 est formé par des roulements 42 à billes, à rouleau ou à aiguilles, de façon similaire aux roulements présents sur les moyeux de roues 30 standards. Les roulements 42 baignent dans de la graisse de lubrification. Pour protéger ces roulements 42, un premier joint d'étanchéité 43a est disposé au niveau de la cavité C, entre les roulements 42 et la roue, et un deuxième joint d'étanchéité 43b est disposé au niveau de la cavité C, entre le moteur hydraulique 10 et les roulements 42. La cavité C'est ainsi étanchéifiée. Par exemple, des bagues à lèvres peuvent convenir ou encore des joints de roulement à montage cassette pour les premiers et deuxièmes joints 43a, 43b.
Plus précisément, dans le mode de réalisation où l'extension radiale 16 ferme la cavité C, au niveau de la jointure entre l'extension radiale 16 de l'arbre 14 et le carter 15, un joint d'étanchéité tournant (bague à lèvres ou joint à glace, ou autre) 43c est prévu pour empêcher la sortie d'huile hydraulique du carter 15. En outre, un volume V est logé à cet endroit, entre les joints 43b et 43c (voir **figure 3**), il peut être fermé et rempli d'air, ou rempli d'un gel, par exemple un gel hydrophobe, ou anti-corrosion, ou bien être relié au milieu extérieur par un perçage, ou relié à une ligne de drain.

L'arbre 14 traverse de part en part l'ensemble 20. Au niveau de la roue, une extrémité externe 14a de l'arbre 14 constitue la fusée de roue sur laquelle est engagé le moyeu 30. De l'autre côté, une extrémité interne 14b, du côté du moteur hydraulique, traverse le distributeur 15a et le couvercle de distribution 15b, voire le carter 15 en fonction des variantes d'architecture de ces éléments.

Cette disposition présente une pluralité d'avantages.

Le première consiste à pouvoir ajouter une fonction mesure de vitesse 50, par exemple pour ABS (« *Antiblockiersystem* », système antiblocage). Cette fonction utilise une cible 51 qui est liée à une partie tournante de l'ensemble, et un capteur 52 qui est lié à une partie fixe (comme le carter 15 ou le couvercle de distributeur 15b par exemple). La fonction mesure de vitesse 50, par exemple pour ABS, mesure la vitesse de rotation de la roue et une unité de calcul (non représentée) mesure les écarts avec la vitesse du véhicule et peut de cette façon ensuite faire ajuster la vitesse de rotation des roues (par relâchement des freins par exemple). La cible 51 est avantageusement située dans l'extrémité interne 14b de l'arbre 14 qui débouche du côté interne de l'ensemble, ce qui permet d'intégrer aisément la fonction mesure de vitesse. La mesure de vitesse 50 sert notamment pour ABS, mais aussi pour tout autre système nécessitant cette donnée.
En outre, en étant fixé à l'extrémité interne 14b de l'arbre 14, la cible 51 peut transmettre des informations relatives à la vitesse de la roue même lorsque le moteur hydraulique 10 est débrayé.

Le deuxième permet de brancher un cardan de transmission à l'arbre 14, par le biais de cette extrémité interne 14b, pour transmettre du couple. Cela permet de combiner le moteur hydraulique 10 avec un autre dispositif de motorisation, tel qu'un moteur thermique ou un autre moteur hydraulique, par exemple à pistons axiaux, présentant une vitesse de rotation plus importante mais un couple plus faible.
Dans un mode de réalisation, le cardan est relié à une chaine de transmission mécanique. La chaine peut comprendre une boite de vitesse entrainée par un moteur thermique. Le moteur hydraulique 10 applique alors un couple dans le même sens (apport de couple) ou dans le sens opposé (retenue) à celui exercé par ladite transmission mécanique.
Grâce au débrayage qui peut libérer l'arbre 14, l'ensemble est adapté pour fonctionner selon plusieurs régimes (vitesse lente, vitesse rapide, fort couple, faible couple) et peut équiper aussi bien des roues qui étaient auparavant libres ou déjà motorisée.

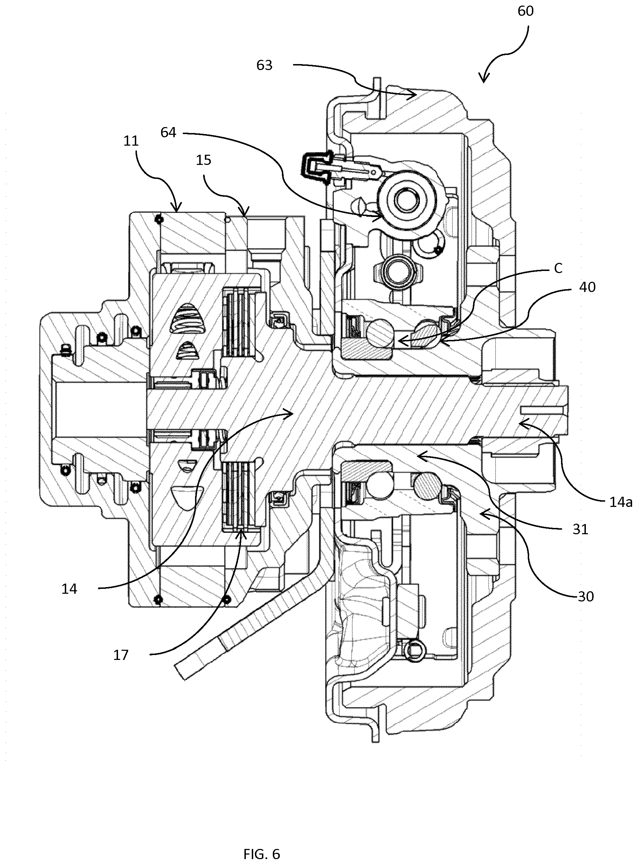

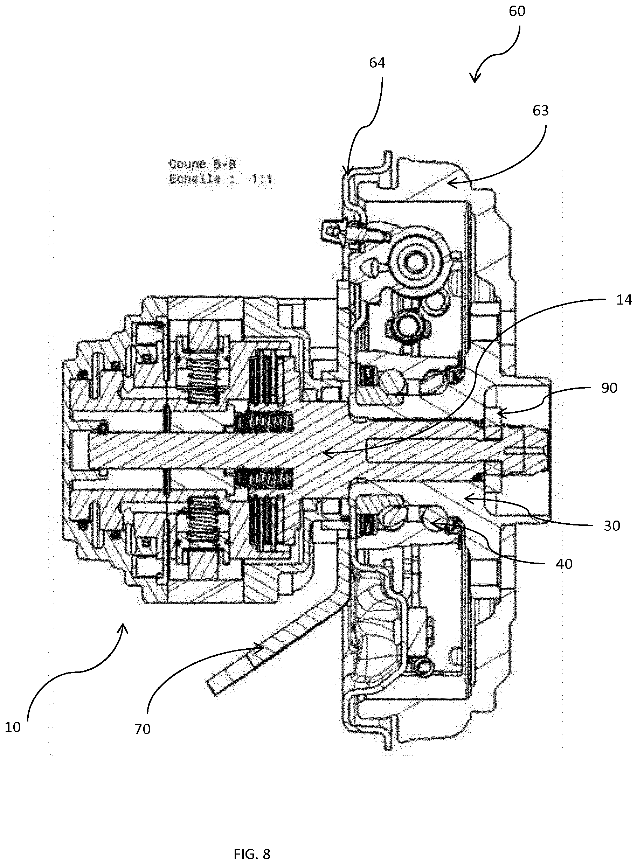

Comme représenté en **figures 6 à 10**, le carter 15 et/ou le couvercle de distribution 15b sont typiquement solidaire d'une pièce de suspension 70. Cette pièce de suspension 70 peut être un bras de suspension, un flasque de bras de suspension, une platine de fixation au bout du bras de suspension. La pièce de suspension 70 permet de lier la chaine d'effort entre le châssis du véhicule et le moteur 10.
Selon une alternative, le carter 15 et/ou le couvercle 15b peuvent constituer eux-mêmes le bras de suspension.
Un bras de suspension peut également être assemblé sur les deux pièces à la fois.

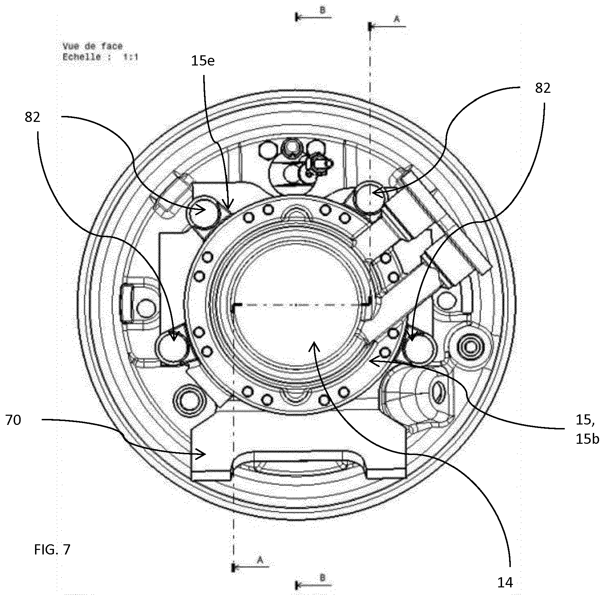

Pour le maintien du carter 15 et/ou du couvercle 15b, des pattes de fixation 15e sont prévues (voir **figure 7**), préférablement venues de matière. Des procédés d'assemblage des différents éléments seront décrits par la suite.

L'ensemble peut aussi intégrer des freins 60.

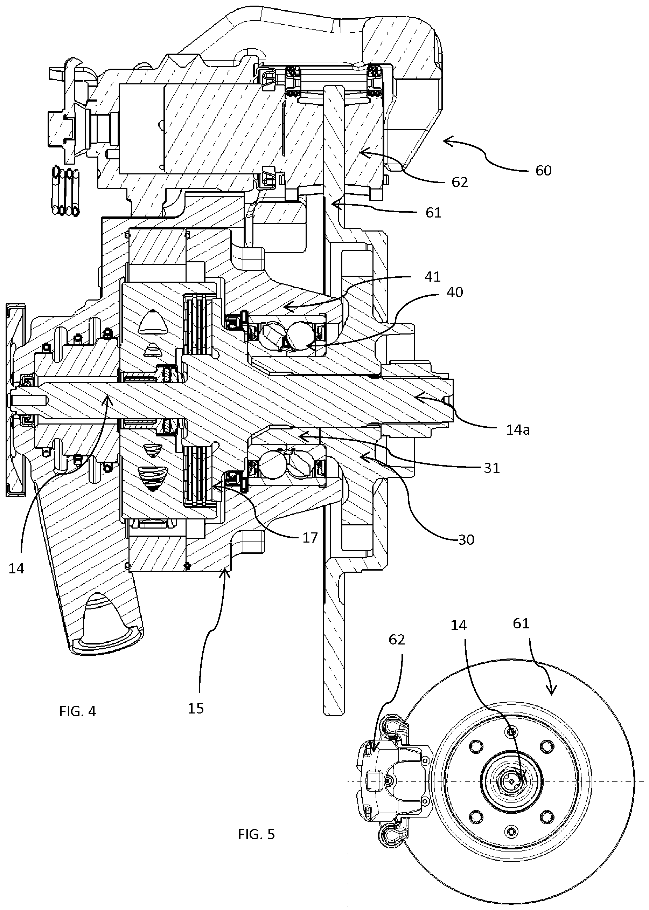

Dans un premier mode de réalisation représenté sur la **figure 3**, les freins sont réalisés par des freins à disque, avec un disque 61 monté solidairement du moyeu 30 et un étrier 62 monté solidairement au carter 15 ou au couvercle de distribution 15b.
Alternativement, l'étrier 62 peut être monté sur la came 11, en la pourvoyant avec des oreilles de fixation, ou encore sur le bras de suspension.
Sur commande hydraulique, l'étrier 62 pince le disque 61 et convertit l'énergie cinétique de rotation en chaleur, pour ralentir le véhicule (**figure 4**).

Dans un deuxième mode de réalisation représenté sur la **figure 6** les freins sont réalisés par des freins à tambour, avec un tambour 63 solidaire du moyeu 30 et une mâchoire 64 solidaire du carter 15. Sur commande, la mâchoire 64 vient se plaquer sur le tambour 63. Sur cette **figure 6**, la cavité C est uniquement formée par le fut de moyeu 31 et le support de palier 41. Des joints sont aussi présents pour l'étanchéité. Le tambour 63 est monté radialement au-delà du palier 40.

Le disque 61 et l'étrier 62, ou le tambour 63 et les mâchoires 64, sont disposés longitudinalement entre la roue et les paliers 40, pour simplifier l'entretien et le démontage.
La partie mordue du disque 61 et l'étrier 62, ou la partie serrée du tambour et les mâchoires 64, sont situés radialement au-delà des paliers 40.

On définit une partie mobile 61, 63 des freins 60 qui comprend notamment le disque et le tambour et on définit une partie fixe 62, 64 des freins 60 qui comprend notamment l'étrier et les mâchoires.

Le moteur 10 tel que décrit ici a l'avantage de pouvoir se monter sur des essieux standards, par assemblage d'un moteur sous forme fermée. On parle de moteur « cartouche », qui ne nécessite pas d'adaptation majeure sur le véhicule qu'il doit équiper et qui se présente sous la forme d'un moteur pré-assemblé, devant essentiellement être monté directement.

### Procédé d'assemblage

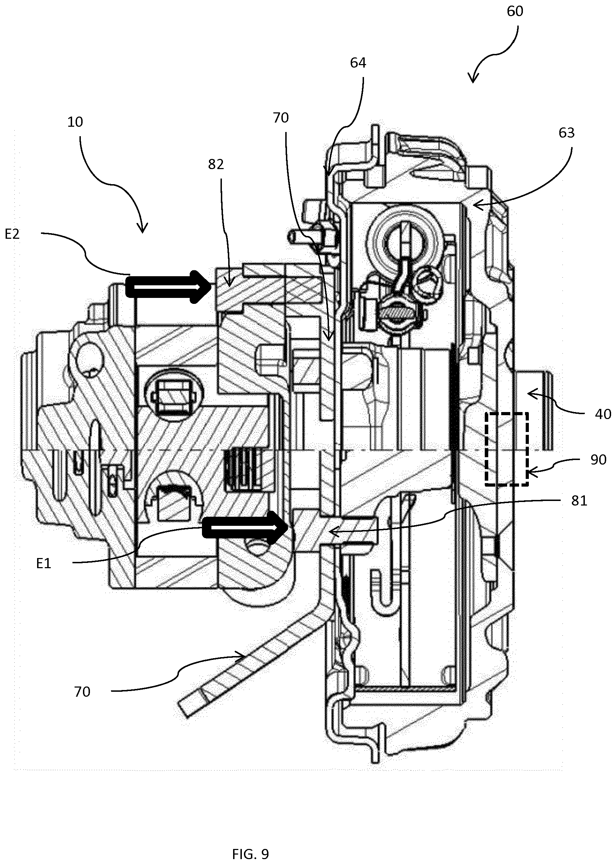

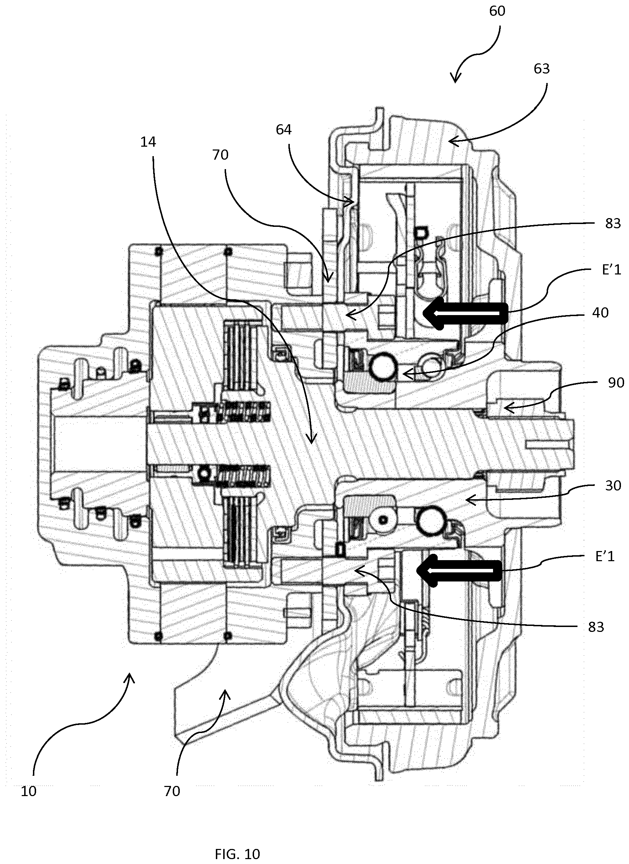

Deux modes de réalisation d'assemblage vont être à présent décrits, en référence aux **figures 9** **et** **10**.

L'élément de suspension 70 est situé longitudinalement (c'est-à-dire selon l'axe de l'arbre 14) entre le moteur 10 et le moyeu de roue 40. Dans le cas d'un frein 60 à tambour, il est situé entre le moteur 10 et le frein à tambour (plus précisément le tambour 63 qui n'est pas entrainé en rotation).

On définit une face interne de l'élément de suspension 70, qui est du côté du moteur, c'est-à-dire côté interne du véhicule, et une face externe de l'élément de suspension 70, qui est du côté du moyeu (ou des paliers), c'est-à-dire côté externe du véhicule.

Le premier mode de réalisation se fait par le côté interne du véhicule, c'est-à-dire du côté opposé à celui de la roue.

Dans une première étape E1 (symbolisée par des flèches sur les figures), la partie fixe 62, 64 est fixée par boulonnage à l'élément de suspension 70 (sur la face externe) à l'aide d'au moins une vis 81.
L'au moins une vis 81 s'insère d'abord dans l'élément de suspension 70 puis ensuite dans la partie fixe 62, 64 des freins 60 (c'est-à-dire vers l'extérieur du véhicule).
Typiquement, quatre vis 81 sont prévues, pour un serrage performant et correctement réparti (non visibles en **figure 7**, du fait du moteur 10).

Dans une deuxième étape E2, le moteur 10 est fixé par boulonnage à l'élément de suspension 70 (sur la face interne) à l'aide d'au moins vis 82. L'au moins une vis 82 s'insère d'abord dans le carter 15 puis ensuite dans l'élément de suspension 70 (c'est-à-dire vers l'extérieur du véhicule).
La vis 81 est alors recouverte par le moteur 10 et n'est plus accessible.
Dans ce mode de réalisation, la partie fixe 62, 64 des freins 60 est vissé d'un côté de l'élément de suspension 70 alors que le moteur 10 est vissé de l'autre côté dudit élément 70. On rappelle que la **figure 9** représente deux plans dans des coupes différentes, si bien que les vis 81 et 82 visibles sur cette figure sont sensiblement diamétralement opposées selon l'axe de l'arbre 14.
Typiquement, quatre vis 82 sont prévues (voir **figure 7**), pour un serrage performant et correctement réparti.

Dans les étapes E1 et E2, les vis 81 et 82 sont serrées.

Dans une étape E3, on assemble la partie mobile 61, 63 des freins 60 et le moyeu 30.
Soit la partie mobile 61, 63 est mise en place et le moyeu est positionnée, soit la partie mobile 61, 63 et le moyeu sont assemblés préalablement.

Dans une étape E4, un écrou 90 de fusée de roue est placé et serré (visible en **figure 9**), pour immobiliser en translation le moyeu 30.
L'écrou 90 est positionné en extrémité 14a de l'arbre 14.
L'écrou 90 contribue au serrage des roulements des paliers 40.

Dans ce mode de réalisation, les vis sont accessibles depuis le côté interne du véhicule, c'est-à-dire que l'assemblage doit être effectué depuis le côté interne de l'essieu.

Le deuxième mode de réalisation se fait par le côté externe du véhicule, c'est-à-dire du côté de la roue.

Dans une première étape préliminaire (E'0), la partie fixe 62, 64 est positionnée sur la face externe sur l'élément de suspension 70. Au moins une vis de pré-maintien peut être prévue (non représentée). La vis de pré-maintien a pour seule fonction de garder le positionnement, et ne permet pas un assemblage du moteur résistant aux efforts lors de l'utilisation.

Dans une deuxième étape préliminaire (E'00), le moteur 10 est placé sur la face interne de l'élément de suspension 70.

Dans une première étape E'1 (symbolisée par des flèches sur les figures), la partie fixe 62, 64, l'élément de suspension 70 et le moteur 10 sont solidarisés entre eux par boulonnage à l'aide d'une vis 83.

La vis 83 s'insère d'abord dans la partie fixe 62, 64 des freins 60 puis ensuite dans l'élément de suspension 70 (c'est-à-dire vers l'intérieur du véhicule) et enfin dans le carter 15 du moteur 10.

Dans cette même étape E'1, une autre vis 83 est insérée de la même façon. Préférablement, cette vis 83 est située diamétralement à l'opposé de la vis 83, pour des raisons d'équilibrage de serrage.

Typiquement, quatre vis 83 sont prévues (voir **figure 10**, dans laquelle on voit deux vis 83 dans une coupe selon l'axe de révolution du moteur 10), pour un serrage performant et correctement réparti.

Dans l'étape E'1, les vis 83 sont serrées.

Dans ce mode de réalisation, l'élément de suspension 70 est pris en sandwich entre le moteur 10 et la partie fixe 62, 64 des freins 60.

Les étapes E'2 et E'3 sont similaires aux étapes E3 et E4 du mode de réalisation précédent, pour immobiliser en translation le moyeu 30. L'écrou 80 contribue au serrage des roulements des paliers 40.

Le moyeu 30 et/ou la partie mobile 61, 63 peut comprendre des dégagements pour passer les vis 83 et les outils nécessaires à l'assemblage.
Alternativement, le moyeu 30 et/ou la partie mobile 61, 63 peut être mis en place sur l'arbre 14 (mais non serré) avant l'étape E1.
Dans ce cas, on passe les vis 83, 84 à travers les dégagements de la partie mobile 61, 63 et/ou le moyeu 30, et après on pose l'écrou de fusée 90 que l'on serre.

Dans ce mode de réalisation, les vis 83 sont accessibles depuis le côté externe du véhicule, c'est-à-dire que l'assemblage doit être effectué depuis le côté externe de l'essieu. Ce mode de réalisation est plus commode pour les chaînes de montage.

Le montage du moteur 10 selon ce procédé est pratique propre, simple et rapide. Le moteur hydraulique est avantageusement placé sous une forme fermée et assemblée sur une fusée de roue de véhicule. Il peut donc être considéré comme un montage en cartouche.

## Revendications

1. Ensemble (20) comprenant :
- Un moteur hydraulique à piston radiaux (10), comprenant un carter fixe (15),
- Un arbre (14), pouvant être entrainé en rotation par le moteur hydraulique (10),
- Un moyeu de roue (30) comprenant un fut de moyeu (31) qui vient en prise sur l'arbre (14),
- Un palier (40),
- Un support de palier (41),
dans lequel :
- le palier (40) est logé entre le fut de moyeu (31) et le support de palier (41) du moteur hydraulique (10),
- le support de palier (41) fait partie du carter (15), de sorte que la fonction palière soit effectuée par le carter (15), l'arbre (14) ne portant que son propre poids et ayant une fonction couple uniquement.

2. Ensemble selon la revendication 1, dans lequel le moteur hydraulique (10) comprend un bloc-cylindre (12) qui entraine en rotation l'arbre (14) et dans lequel ledit bloc-cylindre (12) et l'arbre (14) sont débrayables, la fonction palière étant conservée par le carter (15) en position débrayée et embrayée.

3. Ensemble selon la revendication 2, comprenant un coupleur multi-disque (17) entre le bloc-cylindre (12) et l'arbre (14), le coupleur (17) permettant l'embrayage et le débrayage.

4. Ensemble selon l'une des revendications précédentes, dans lequel le palier (40) est situé longitudinalement entre le moyeu (30) et le moteur hydraulique (10).

5. Ensemble selon l'une des revendications précédentes, dans lequel l'arbre (14) est traversant du côté du moteur hydraulique (10).

6. Ensemble selon l'une des revendications précédentes, dans lequel le moteur comprend une fonction mesure de vitesse (50), comprenant une cible (51) liée à une partie tournante (14, 14b), et un capteur (52) lié à une partie fixe (15, 15b) du moteur (10), donnant une indication de vitesse de rotation de la roue même si le moteur (10) est débrayé.

7. Ensemble selon l'une des revendications précédentes, comprenant en outre des freins (60).

8. Ensemble selon la revendication précédente, dans lequel
- le frein est un frein à disque avec un disque (61) monté solidairement au moyeu (30) et un étrier (62) monté solidairement au carter (15) et/ou à un couvercle de distribution (15b) et adapté pour pincer le disque (61), ou
- le frein est un frein à tambour, avec un tambour solidaire (63) du moyeu (30) et au moins une mâchoire (64) solidaire du carter (15).

9. Ensemble selon la revendication 5, dans lequel un cardan de transmission est relié à la partie traversant (14b) de l'arbre (14), ledit cardan transmettant un couple à l'arbre (14).

10. Ensemble suivant la revendication 9, dans lequel ledit cardan est relié à une chaine de transmission mécanique, le moteur hydraulique (10) appliquant un couple dans le même sens ou dans le sens opposé à celui exercé par ladite transmission mécanique.

11. Système comprenant un ensemble (20) selon l'une quelconque des revendications précédentes et un élément de suspension (70), **caractérisé en ce que** le carter (15) et/ou un couvercle de distribution (15b), est solidaire de l'élément de suspension (70).

12. Procédé d'assemblage d'un système selon la revendication 11, comprenant une étape de solidarisation du moteur (10) et des freins (60) à l'élément de suspension (70) à l'aide de vis (81, 82).

13. Procédé d'assemblage selon la revendication 12, dans lequel l'étape de solidarisation comprend les étapes suivantes :
- (E1) Mise en place et solidarisation d'une partie fixe (62, 64) des freins (60) à l'élément de suspension (70) à l'aide de vis (81), la vis (81) s'insérant d'abord dans l'élément de suspension (70) puis ensuite dans la partie fixe (62, 64),
- (E2) Mise en place et solidarisation du moteur (10) à l'élément de suspension à l'aide de vis (82), chaque vis (82) s'insérant d'abord dans le carter (15) du moteur (10) puis ensuite dans l'élément de suspension (70),
de sorte que l'assemblage soit destiné à être fait depuis l'intérieur du véhicule, côté essieu.

14. Procédé d'assemblage selon la revendication 13, dans lequel le système comprend des freins (60), dans lequel l'étape de solidarisation comprend les étapes suivantes :
- (E'0 E'00) Mise en place du moteur (10) et d'une partie fixe (62, 64) des freins (60) de part et d'autre de l'élément de suspension (70),
- (E'1) Solidarisation du moteur (10), de l'élément de suspension (70) et de la partie fixe (62, 64) des freins (60), à l'aide de vis (83), chaque vis (83) s'insérant d'abord dans la partie fixe (62, 64) puis dans l'élément de suspension (70) et enfin dans le carter (15).
de sorte que l'assemblage puisse être effectué depuis l'extérieur du véhicule, côté roue.

15. Procédé d'assemblage selon l'une quelconque des revendications 12 à 14, comprenant une étape de
- (E3, E'2) mise en place du moyeu (30) et d'une partie mobile (61, 63) des freins, configurée pour être solidaires du moyeu (30),
- (E4, E'3) mise en place d'un écrou de fusée (90) en extrémité (14a) de l'arbre (14) pour maintenir le moyeu (30).

## Patentansprüche

1. Einheit (20), umfassend:
- einen Hydraulikmotor mit radialen Kolben (10), umfassend ein festes Gehäuse (15),
- eine Welle (14), die von dem Hydraulikmotor (10) rotierend antreibbar ist,
- eine Radnabe (30), umfassend einen Nabenschaft (31), der auf der Welle (14) in Eingriff kommt,
- ein Lager (40),
- eine Lagerhalterung (41),
wobei:
- das Lager (40) zwischen dem Nabenschaft (31) und der Lagerhalterung (41) des Hydraulikmotors (10) untergebracht ist,
- die Lagerhalterung (41) derart Teil des Gehäuses (15) ist, dass die Lagerfunktion von dem Gehäuse (15) erfüllt wird, wobei die Welle (14) nur ihr eigenes Gewicht trägt und nur eine Drehmomentfunktion hat.

2. Einheit nach Anspruch 1, wobei der Hydraulikmotor (10) einen Zylinderblock (12) umfasst, der die Welle (14) rotierend antreibt und wobei der Zylinderblock (12) und die Welle (14) entkuppelbar sind, wobei die Lagerfunktion von dem Gehäuse (15) in entkuppelter und gekuppelter Position beibehalten wird.

3. Einheit nach Anspruch 2, umfassend einen Mehrscheibenkoppler (17) zwischen dem Zylinderblock (12) und der Welle (14), wobei der Koppler (17) das Kuppeln und das Entkuppeln erlaubt.

4. Einheit nach einem der vorangehenden Ansprüche, wobei sich das Lager (40) längs zwischen der Nabe (30) und dem Hydraulikmotor (10) befindet.

5. Einheit nach einem der vorangehenden Ansprüche, wobei die Welle (14) von der Seite des Hydraulikmotors (10) durchgängig ist.

6. Einheit nach einem der vorangehenden Ansprüche, wobei der Motor eine Geschwindigkeitsmessfunktion (50) umfasst, umfassend ein Ziel (51), das mit einem drehenden Teil (14, 14b) verbunden ist, und einen Sensor (52), der mit einem festen Teil (15, 15b) des Motors (10) verbunden ist, die eine Rotationsgeschwindigkeitsmessangabe des Rades gibt, auch wenn der Motor (10) entkuppelt ist.

7. Einheit nach einem der vorangehenden Ansprüche, umfassend ferner Bremsen (60).

8. Einheit nach vorangehendem Anspruch, wobei
- die Bremse eine Scheibenbremse ist mit einer Scheibe (61), die mit der Nabe (30) fest verbunden angebracht ist, und einem Bügel (62), der mit dem Gehäuse (15) und/oder einem Verteilerdeckel (15b) fest verbunden angebracht ist und geeignet, die Scheibe (61) einzuklemmen, oder
- die Bremse eine Trommelbremse ist mit einer Trommel (63), die mit der Nabe (30) fest verbunden ist und mindestens einer Backe (64), die mit dem Gehäuse (15) fest verbunden ist.

9. Einheit nach Anspruch 5, wobei ein Übertragungskardangelenk mit dem durchgängigen Teil (14b) der Welle (14) verbunden ist, wobei das Kardangelenk ein Drehmoment an die Welle (14) überträgt.

10. Einheit nach Anspruch 9, wobei das Kardangelenk mit einer mechanischen Übertragungskette verbunden ist, wobei der Hydraulikmotor (10) ein Drehmoment in derselben Richtung oder in der entgegengesetzten Richtung zu der, die von der mechanischen Übertragung ausgeübt wird, anwendet.

11. System, umfassend eine Einheit (20) nach einem der vorangehenden Ansprüche und ein Aufhängungselement (70), **dadurch gekennzeichnet, dass** das Gehäuse (15) und/oder ein Verteilerdeckel (15b) mit dem Aufhängungselement (70) fest verbunden ist.

12. Verfahren zur Montage eines Systems nach Anspruch 11, umfassend einen Schritt der festen Verbindung des Motors (10) und der Bremsen (60) mit dem Aufhängungselement (70) mit Hilfe von Schrauben (81, 82) .

13. Montageverfahren nach Anspruch 12, wobei der Schritt des festen Verbindens die folgenden Schritte umfasst:
- (E1) Platzieren und festes Verbinden eines festen Teils (62, 64) der Bremsen (60) mit dem Aufhängungselement (70) mit Hilfe von Schrauben (81), wobei die Schraube (81) zunächst in das Aufhängungselement (70) und dann in den festen Teil (62, 64) eingesetzt wird,
- (E2) Platzieren und festes Verbinden des Motors (10) mit dem Aufhängungselement mit Hilfe von Schrauben (82), wobei jede Schraube (82) zunächst in das Gehäuse (15) des Motors (10) und dann in das Aufhängungselement (70) eingesetzt wird,
so dass die Montage bestimmt ist, von innerhalb des Fahrzeugs achsseitig durchgeführt zu werden.

14. Montageverfahren nach Anspruch 13, wobei das System Bremsen (60) umfasst, wobei der Schritt des festen Verbindens die folgenden Schritte umfasst:
- (E'0, E'00) Platzieren des Motors (10) und eines festen Teils (62, 64) der Bremsen (60) beiderseits des Aufhängungselements (70),
- (E'1) festes Verbinden des Motors (10), des Aufhängungselements (70) und des festen Teils (62, 64) der Bremsen (60) mit Hilfe von Schrauben (83), wobei jede Schraube (83) zunächst in den festen Teil (62, 64), dann in das Aufhängungselement (70) und schließlich in das Gehäuse (15) eingesetzt wird,
so dass die Montage von außerhalb des Fahrzeugs radseitig durchführbar ist.

15. Montageverfahren nach einem der Ansprüche 12 bis 14, umfassend einen Schritt des
- (E3, E'2) Platzierens der Nabe (30) und eines beweglichen Teils (61, 63) der Bremsen, der konfiguriert ist, um mit der Nabe (30) fest verbunden zu sein,
- (E4, E'3) Platzieren einer Spindelmutter (90) am Ende (14a) der Welle (14), um die Nabe (30) zu halten.

## Claims

1. An assembly (20) comprising:
- a radial piston hydraulic motor (10), comprising a stationary casing (15),
- a shaft (14), which can be driven in rotation by the hydraulic motor (10),
- a wheel hub (30) comprising a hub barrel (31) that engages on the shaft (14),
- a bearing (40),
- a bearing support (41),
wherein:
- the bearing (40) is housed between the hub barrel (31) and the bearing support (41) of the hydraulic motor (10),
- the bearing support (41) is part of the casing (15) so that the bearing function is performed by the casing (15), the shaft (14) carrying only its own weight and having only a torque function.

2. The assembly according to claim 1, wherein the hydraulic motor (10) comprises a cylinder block (12) which drives in rotation the shaft (14) and wherein said cylinder block (12) and the shaft (14) are disengageable, the bearing function being preserved by the casing (15) in the disengaged and engaged position.

3. The assembly according to claim 2, comprising a multi-disc coupler (17) between the cylinder block (12) and the shaft (14), the coupler (17) allowing the engagement and the disengagement.

4. The assembly according to any of the preceding claims, wherein the bearing (40) is located longitudinally between the hub (30) and the hydraulic motor (10).

5. The assembly according to any of the preceding claims, wherein the shaft (14) is a through-shaft on the side of the hydraulic motor (10).

6. The assembly according to any of the preceding claims, wherein the motor comprises a speed measurement function (50), comprising a target (51) connected to a rotating portion (14, 14b), and a sensor (52) connected to a stationary portion (15, 15b) of the motor (10), giving an indication of the speed of rotation of the wheel even if the motor (10) is disengaged.

7. The assembly according to any of the preceding claims, further comprising brakes (60).

8. The assembly according to the preceding claim, wherein:
- the brake is a disc brake with a disc (61) mounted securely to the hub (30) and a caliper (62) mounted securely to the casing (15) and/or to a dispensing cap (15b) and adapted to clamp the disc (61), or
- the brake is a drum brake, with a secured drum (63) of the hub (30) and at least one jaw (64) secured to the casing (15).

9. The assembly according to claim 5, wherein a transmission cardan is connected to the through-portion (14b) of the shaft (14), said cardan transmitting a torque to the shaft (14).

10. The assembly according to claim 9, wherein said cardan is connected to a mechanical transmission chain, the hydraulic motor (10) applying a torque in the same direction or in the opposite direction to that exerted by said mechanical transmission.

11. A system comprising an assembly (20) according to any one of the preceding claims and a suspension element (70), **characterized in that** the casing (15) and/or a dispensing cap (15b) is secured to the suspension element (70).

12. A method for assembling a system according to claim 11, comprising a step of securing the motor (10) and brakes (60) to the suspension element (70) by means of screws (81, 82).

13. The assembly method according to claim 12, wherein the securing step comprises the following steps:
- (E1) setting up and securing a stationary portion (62, 64) of the brakes (60) to the suspension element (70) by means of screws (81), the screw (81) being first inserted into the suspension element (70) and then in the stationary portion (62, 64),
- (E2) setting up and securing the motor (10) to the suspension element by means of screws (82), each screw (82) being first inserted into the casing (15) of the motor (10) and then into the suspension element (70),
so that the assembly is intended to be made from the inside of the vehicle, on the axle side.

14. The assembly method according to claim 13, wherein the system comprises brakes (60), wherein the securing step comprises the following steps:
- (E'0, E'00) setting up the motor (10) and a stationary portion (62, 64) of the brakes (60) on either side of the suspension element (70),
- (E'1) securing the motor (10), the suspension element (70) and the stationary portion (62, 64) of the brakes (60) by means of screws (83), each screw (83) being first inserted into the stationary portion (62, 64) then into the suspension element (70) and finally into the casing (15).
so that the assembly can be done from the outside of the vehicle, on the wheel side.

15. The assembly method according to any one of claims 12 to 14, comprising a step of:
- (E3, E'2) setting up the hub (30) and a movable portion (61, 63) of the brakes, configured to be secured to the hub (30),
- (E4, E'3) setting up a spindle nut (90) at the end (14a) of the shaft (14) in order to hold the hub (30) .
